# EUROPEAN PATENT APPLICATION

(11) **EP 4 435 482 A1**
(43) Date of publication of application: **25.09.2024**
(21) Application number: 22895257.8
(22) Date of filing: 03.10.2022
(51) Int. Cl.: G02B 6/36, G02B 6/02

(54) **OPTICAL CONNECTOR**

(30) Priority: 19.11.2021 JP 2021188449
(71) Applicant: SUMITOMO ELECTRIC INDUSTRIES, LTD., Osaka-shi, Osaka 541-0041 (JP)
(72) Inventor: MORISHIMA, Tetsu, Osaka-shi, Osaka 541-0041 (JP)
(74) Representative: TBK
(86) International application number: PCT/JP2022/036981
(87) International publication number: WO 2023/089971

(57) **Abstract**

An optical connector of the present disclosure suppresses rotation of a ferrule caused by expansion and contraction of an elastic member in a housing. The corresponding optical connector includes a ferrule assembly having a ferrule and a holding portion provided with a flange, a housing, an elastic member, and an urging force transmission member. The urging force transmission member has a through hole that allows the holding portion to pass therethrough and is arranged between the flange and the elastic member in a state of allowing a part of the holding portion to pass through and being rotatable about the central axis of the holding portion.

## Description

### Technical Field

The present disclosure relates to an optical connector.
This application claims priority from Japanese Patent Application No. 2021-188449 filed on November 19, 2021, which is based on the contents of which are incorporated herein by reference in their entirety.

### Background Art

As disclosed in Patent Documents 1 and 2, an SC type single core optical connector or an LC type single core optical connector is known as a normal single core optical connector. In order to stabilize the position of a ferrule, these optical connectors adopt a structure in which the ferrule is biased by a coil-shaped spring material stored in a housing.

### Citation List

### Patent Literature

Patent Document 1: Japanese Patent Application Laid-Open No. 2014-106440
Patent Document 2: Japanese Patent Application Laid-Open No. 2015-001570

### Summary of Invention

An optical connector of the present disclosure is attached to a distal end portion of an optical fiber, and the optical fiber includes a glass fiber and a resin coating covering the glass fiber. The optical connector includes a ferrule assembly, a housing, an elastic member, and an urging force transmission member. The ferrule assembly includes a ferrule and a holding portion. The ferrule is fixed to a distal end portion of the glass fiber exposed from the resin coating in the optical fiber. The holding portion is fixed to a rear end portion of the ferrule and is provided with a flange. The housing has an internal space in which at least the holding portion of the ferrule assembly is stored and a positioning portion for restricting movement of the holding portion in the internal space. The elastic member biases the flange toward the positioning portion. The urging force transmission member is a member that transmits the urging force of the elastic member to the flange and has a first surface that abuts against the flange and a second surface that is positioned on an opposite side of the first surface and abuts against the elastic member. Particularly, the urging force transmission member has a through hole that allows the holding portion to pass therethrough and is arranged between the flange and the elastic member in a state of allowing a part of the holding portion to pass through and being rotatable about the central axis of the holding portion.

### Brief Description of Drawings

Fig. 1 is a diagram illustrating a schematic structure of an optical connector of the present disclosure.
Fig. 2 is a diagram illustrating various assembly steps including an alignment work of a ferrule assembly.
Fig. 3 is a diagram illustrating various structures of the ferrule assembly.
Fig. 4 is a diagram illustrating a cross-sectional structure of each part of the optical connector of the present disclosure and a floating structure of the ferrule assembly stored in a housing.
Fig. 5 is a diagram illustrating an effect of the optical connector of the present disclosure.

### Description of Embodiments

### [Problems to be Solved by the Present Disclosure]

As a result of studying the above-described related art, the inventor has found the following problems. That is, in the optical connector in the related art, in the biased state of the ferrule, one end of the spring material abuts against the inner wall of the housing, and the other end abuts against the flange provided on the ferrule side. The spring material expands and contracts along with the position fluctuation of the biased ferrule. However, the contact region of the housing inner wall surface and the flange with the spring material is not distributed in an annular ring shape so as to surround the ferrule central axis. Therefore, when the spring material expands and contracts, a rotational torque is generated in the spring material due to friction between each member and the spring material. As a result, the spring material rotates, and posture fluctuation of the spring material occurs. Due to the rotation of the spring material, a rotational torque is also generated in the flange in direct contact with the spring material, and as a result, the ferrule and the flange in the housing are caused to rotate.

The present disclosure has been made to solve the above-described problems, and an object of the present disclosure is to provide an optical connector having a structure for suppressing rotation of a ferrule caused by expansion and contraction of an elastic member due to positional fluctuation of a ferrule assembly in a housing and accurately realizing rotational positioning of the ferrule in the housing.

### [Effects of Present Disclosure]

With the optical connector of the present disclosure, it is possible to suppress the rotation of the ferrule caused by the expansion and contraction of the elastic member due to the position fluctuation of the ferrule assembly in the housing, and to accurately realize the rotational positioning of the ferrule in the housing.

### [Description of Embodiments of Present Disclosure]

First, contents of embodiments of the present disclosure are individually listed and described.
(1) An optical connector of the present disclosure is attached to a distal end portion of an optical fiber, and the optical fiber includes a glass fiber and a resin coating covering the glass fiber. The optical connector includes a ferrule assembly, a housing, an elastic member, and an urging force transmission member. The ferrule assembly includes a ferrule and a holding portion. The ferrule is fixed to a distal end portion of the glass fiber exposed from the resin coating in the optical fiber. The holding portion is fixed to a rear end portion of the ferrule and is provided with a flange. The housing has an internal space in which at least the holding portion of the ferrule assembly is stored and a positioning portion for restricting movement of the holding portion in the internal space. The elastic member biases the flange toward the positioning portion. The urging force transmission member is a member that transmits the urging force of the elastic member to the flange and has a first surface that abuts against the flange and a second surface that is positioned on an opposite side of the first surface and abuts against the elastic member. Particularly, the urging force transmission member has a through hole that allows the holding portion to pass therethrough and is arranged between the flange and the elastic member in a state of allowing a part of the holding portion to pass through and being rotatable about the central axis of the holding portion. That is, the through hole of the urging force transmission member has such a size that the urging force transmission member is movable along the central axis of the holding portion and is rotatable about the central axis in a state of allowing a part of the holding portion to pass through before the urging force is imparted by the elastic member.

Normally, a rotational torque may be generated in the elastic member itself due to expansion and contraction of the elastic member due to a position fluctuation of the ferrule assembly in the housing. In such a situation, when the elastic member and the flange are in direct contact with each other, the flange also rotates due to the rotation of the elastic member, and as a result, the rotational positioning of the ferrule cannot be accurately realized. However, with the optical connector of the present disclosure, since the urging force transmission member exists between the flange and the elastic member, the rotation of the ferrule due to the expansion and contraction of the elastic member caused by the position fluctuation of the ferrule assembly in the housing is suppressed, and as a result, the rotational positioning of the ferrule in the housing can be accurately realized. In addition, such an urging force transmission member can also be comprised of a material that can use, for example, an injection molding method and can achieve both low connection loss characteristics and manufacturing easiness.

(2) As one aspect of the present disclosure, the urging force transmission member may be configured with a plurality of urging force transmission elements. Each of the plurality of urging force transmission elements has a hole configuring a part of the through hole of the urging force transmission member. In addition, each of the plurality of urging force transmission elements is arranged along the central axis of the holding portion in a state of allowing the part of the holding portion to pass through and being rotatable about the central axis of the holding portion. That is, the holes of the plurality of urging force transmission elements each may have such a size that the urging force transmission element is movable along the central axis of the holding portion and is rotatable about the central axis in a state of allowing a part of the holding portion to pass through before the urging force is imparted by the elastic member. In this case, the transmission of the rotational torque from the elastic member to the flange due to the rotation of the elastic member in the housing can be alleviated by interposing the plurality of members that can move and rotate independently in the space from the elastic member to the flange.

(3) As one aspect of the present disclosure, the maximum width of the planar figure defined by the outer contour of the first surface of the urging force transmission member is smaller than the minimum width of the planar figure defined by the outer contour of the surface of the flange against which the first surface abuts. Meanwhile, the maximum width of the planar figure defined by the outer contour of the second surface of the urging force transmission member may be larger than the maximum width of the planar figure surrounded by the elastic member when the elastic member is viewed along the central axis of the holding portion. In this configuration, even when the clearance between the holding portion and the through hole of the urging force transmission member becomes comparatively large, the state in which the elastic member is directly in contact with the flange can be effectively avoided by the existence of the urging force transmission member.

(4) As one aspect of the present disclosure, the contact region between the first surface of the urging force transmission member and the flange may have an annular shape centered on the central axis of the holding portion. In this case, an abutting state symmetrical with respect to the optical axis of the optical fiber can be realized between the flange and the urging force transmission member.

(5) As one aspect of the present disclosure, the static friction coefficient between the flange and the urging force transmission member may be smaller than the static friction coefficient between the flange and the elastic member. In this case, the transmission of the rotational torque from the elastic member to the flange can be further alleviated.

(6) As one aspect of the present disclosure, as one aspect of the present disclosure, the material of the flange may be metal, and the material of the urging force transmission member may be a resin. As described above, the material is selected so as to reduce the static friction coefficient between the flange and the urging force transmission member with respect to the static friction coefficient between the flange and the elastic member, whereby the above-described alleviation of the transmission of the rotational torque from the elastic member to the flange can be realized.

(7) As one aspect of the present disclosure, the optical fiber may be any of a multicore fiber, a polarization maintaining fiber, and a bundled fiber. In the optical fiber that requires positioning in the rotation direction, highly accurate positioning is realized, and as a result, low connection loss can be realized.

(8) In any one of the above (1) to (7), the holding portion may include a sleeve into which the rear end portion of the ferrule is inserted, and the central axis of the sleeve coincides with the central axis of the holding portion. In this case, the flange is attached to the sleeve, so that the holding portion can be easily handled.

(9) In any one of the above (1) to (7), the positioning portion restricts movement in a direction along the central axis of the holding portion and movement in a direction intersecting the direction along the central axis of the holding portion. As a result, the posture of the holding portion in the internal space of the housing is stabilized.

(10) In any one of the above (1) to (9), the elastic member may be a spring material that rotates in a circumferential direction centered on an expanding and contracting direction at the time of expansion and contraction. Even when the rotational torque is generated in the spring material, the urging force of the spring material is transmitted to the flange via the urging force transmission member of the present disclosure, so that the rotational positioning of the ferrule in the housing can be accurately realized and maintained.

### [Details of Embodiments of Present Disclosure]

Hereinafter, a specific example of an optical connector according to the present disclosure is described in detail with reference to the accompanying drawings. Note that the present invention is not limited to these examples and is indicated by the claims and is intended to include all changes within the meaning and scope equivalent to the claims. Also, in the description of the drawings, the same elements are denoted by the same reference numerals, and redundant description is omitted.

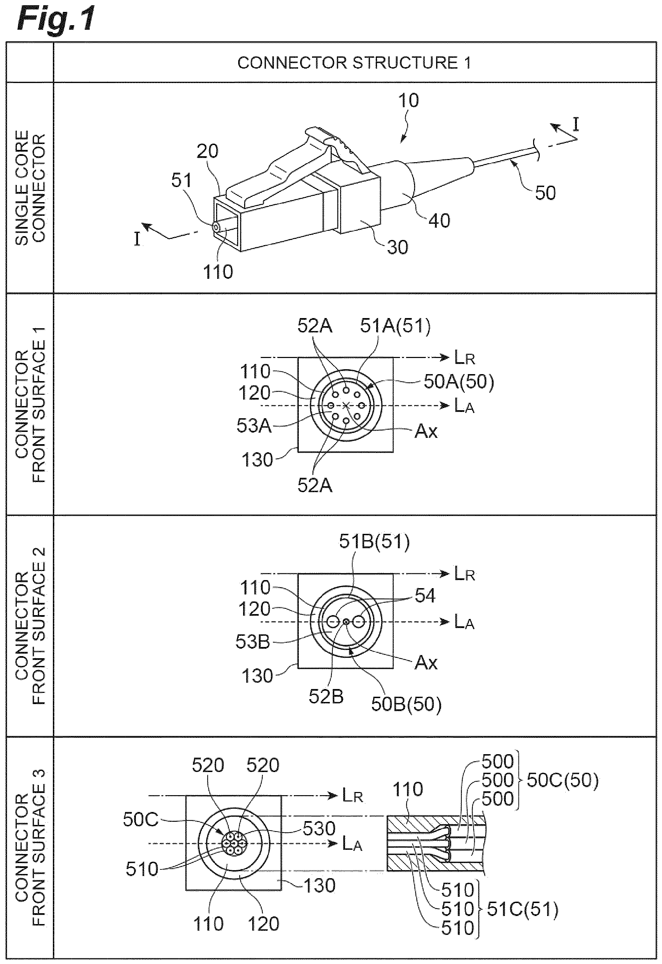

Fig. 1 is a diagram illustrating a schematic structure of an optical connector of the present disclosure. Specifically, in the uppermost stage (in Fig. 1, it is referred to as a "single core connector"), an example of an appearance of a push-pull-type optical connector 10 is illustrated as an example of the optical connector of the present disclosure. In the second stage (in Fig. 1, it is referred to as "connector front surface 1"), as an example of an optical fiber 50 to which a ferrule 110 is attached (an optical fiber requiring alignment), a front view of the optical connector 10 including an end surface of a MCF 50A (multi-core optical fiber) is illustrated. In the third stage (in Fig. 1, it is referred to as a "connector front surface 2"), as another example of the optical fiber 50 to which the ferrule 110 is attached, a front view of the optical connector 10 including an end surface of a PMF 50B (polarization maintaining optical fiber) is illustrated. In the lowermost stage (in Fig. 1, it is referred to as a "connector front surface 3"), a front view and a cross-sectional view of a bundle fiber 50C in which a plurality of single core optical fibers are bundled are illustrated.

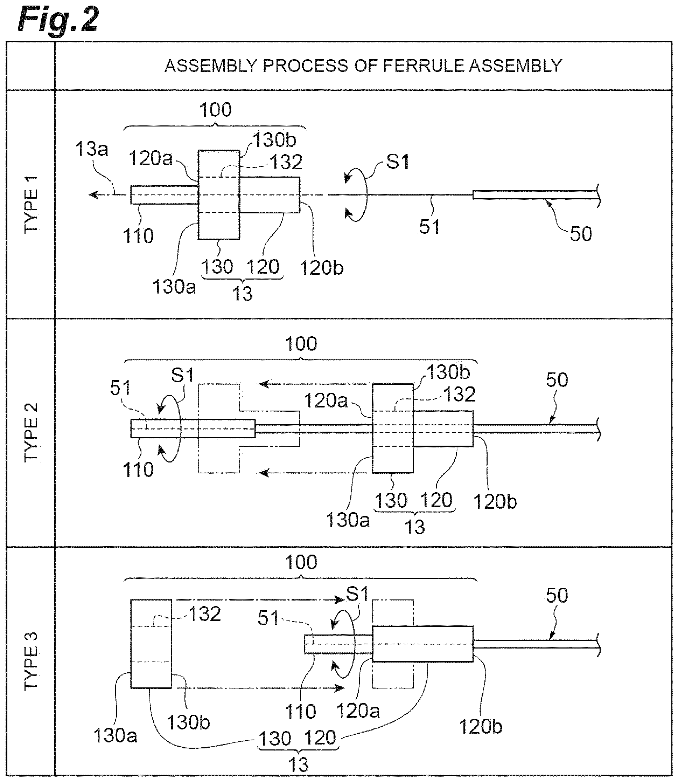

A housing of the optical connector 10 illustrated in the uppermost stage of Fig. 1 is configured with a front housing 20 and a rear housing 30, and a ferrule assembly 100 including the ferrule 110 and an elastic member such as a spring material for stably maintaining a storage position of the ferrule assembly 100 are stored in the housing. In the optical fiber 50, the ferrule 110 is attached to a glass fiber 51 positioned at a distal end portion including an end surface, and a boot 40 is attached to the rear housing 30 in order to protect the optical fiber 50 extending from the rear housing 30. As illustrated in Fig. 2, the ferrule assembly 100 includes the ferrule 110 attached to the distal end portion of the glass fiber 51 from which the resin coating is removed, and a holding portion 13 configured with a flange 130 and a sleeve 120, and the ferrule 110 is fixed to the holding portion 13 by inserting the rear end portion of the ferrule 110 into the sleeve 120.

In the front view of the optical connector 10 illustrated in the second stage of Fig. 1, the end surface of the MCF 50A as the optical fiber 50 that requires alignment, the ferrule 110 attached to a glass fiber 51A at the distal end portion of the MCF 50A, the sleeve 120 into which the ferrule 110 is inserted, and the flange 130 are illustrated. The MCF 50A includes a plurality of cores 52A each extending along the central axis of the MCF 50A corresponding to a fiber axis AX, and a common cladding 53A surrounding each of the plurality of cores 52A. A line L_{A} indicates a reference azimuth of the rotational alignment of the MCF 50A, that is, an azimuth at a rotation angle of 0°, and a line L_{R} is a rotation angle reference of the flange and an installation reference line of the ferrule assembly 100 along an edge of the flange 130. In the ferrule assembly 100 including the aligned MCF 50A, the lines L_{A} and L_{R} are parallel.

In the front view of the optical connector 10 illustrated in the third stage of Fig. 1, the end surface of the PMF 50B as the optical fiber 50 that requires alignment, the ferrule 110 attached to a glass fiber 51B at the distal end portion of the PMF 50B, the sleeve 120 into which the ferrule 110 is inserted, and the flange 130 are illustrated. The PMF 50B includes a core 52B extending along a central axis of the PMF 50B corresponding to the fiber axis AX, a stress applying portion 54 arranged so as to sandwich the core 52B, and a common cladding 53B surrounding each of the core 52B and the stress applying portion 54. In the ferrule assembly 100 including the aligned PMF 50B, the line L_{A} and the line L_{R} are parallel.

In the front view of the optical connector 10 illustrated in the lowermost stage of Fig. 1, the end surface of the bundle fiber 50C as the optical fiber 50 that requires alignment, the ferrule 110 to which the distal end portions of the plurality of single core optical fibers 500 that configures the bundle fiber 50C are integrally attached, the sleeve 120 into which the ferrule 110 is inserted, and the flange 130 are illustrated. Note that each of the plurality of single core optical fibers 500 is configured with a glass fiber 510 and a resin coating, and each glass fiber 510 includes a core 520 and a cladding 530. The glass fiber 510 bundled by the ferrule 110 configures a glass fiber 51C. In addition, the arrangement of the cores 520 in a state where the plurality of glass fibers 510 are bundled substantially corresponds to the core arrangement of the MCF 50A described above. In the ferrule assembly 100 including the aligned bundle fiber 50C, the line L_{A} and the line L_{R} are parallel.

Fig. 2 is a diagram illustrating various assembly steps including an alignment work of a ferrule assembly (in Fig. 2, it is described as an "assembly process of ferrule assembly"). Specifically, the upper stage (in Fig. 2, it is referred to as "Type 1") is a diagram illustrating a method of aligning the optical fiber 50 with respect to the ferrule assembly 100 assembled in advance. A middle stage (in Fig. 2, it is referred to as "Type 2") is a diagram illustrating a method of assembling the ferrule assembly 100 by aligning the optical fiber 50 having the distal end portion to which the ferrule 110 is attached with respect to the flange 130 integrated with the sleeve 120. A lower stage (in Fig. 2, it is referred to as "Type 3") is a diagram illustrating a method of assembling the ferrule assembly 100 by aligning the optical fiber 50 having the distal end portion to which the ferrule 110 and the sleeve 120 are attached with respect to the flange 130. Note that the sleeve 120 and the flange 130 configure the holding portion 13 that holds one end portion of the ferrule 110, and the central axis of the sleeve 120 and a central axis 13a of the holding portion 13 coincide with each other.

In "Type 1" illustrated in the upper stage of Fig. 2, a structural body to be the ferrule assembly 100 is assembled before being attached to the glass fiber 51 at the distal end portion of the optical fiber 50. Note that, as described above, the ferrule assembly 100 is configured with the ferrule 110 and the holding portion 13, and the holding portion 13 is configured with the sleeve 120 having a front end surface 120a and a rear end surface 120b and the flange 130 having a front surface 130a and a rear surface 130b. The rear portion of the ferrule 110 is press-fitted into the opening portion of the through hole positioned on the front end surface 120a of the sleeve 120, and the front end surface 120a side of the sleeve 120 is press-fitted into the through hole 132 of the flange 130 in a state in which the ferrule 110 is mounted. When the alignment work of the optical fiber 50 performed by rotating the optical fiber 50 by a predetermined angle in the direction indicated by an arrow S1 is completed, the ferrule 110 of the ferrule assembly 100 previously assembled is attached to the glass fiber 51 at the distal end portion of the aligned optical fiber 50. The front view of the ferrule assembly 100 attached to the aligned optical fiber 50 coincides with the front views illustrated from the second stage to the lowermost stage in Fig. 1.

In "Type 2" illustrated in the middle stage of Fig. 2, in a state in which the ferrule 110 is attached to the glass fiber 51 at the distal end portion of the optical fiber 50, the optical fiber 50 is aligned with respect to the holding portion 13, which is a structural body including the sleeve 120 and the flange 130 previously assembled by press-fitting the sleeve 120 into the through hole 132 of the flange 130. That is, the rotation operation of the optical fiber 50 along the direction indicated by the arrow S1 is performed. During the alignment, the optical fiber 50 is maintained in a state of passing through the through hole of the holding portion. When the alignment work is completed, one end of the ferrule 110 attached to the distal end portion of the optical fiber 50 is press-fitted into the through hole of the sleeve 120 from the front end surface 120a side of the sleeve 120. The front view of the ferrule assembly 100 attached to the aligned optical fiber 50 coincides with the front views illustrated from the second stage to the lowermost stage in Fig. 1.

Further, in "Type 3" illustrated in the lower stage of Fig. 2, the optical fiber 50 is aligned with respect to the flange 130 in a state in which the structural body including the ferrule 110 and the sleeve 120 is attached to the glass fiber 51 at the distal end portion of the optical fiber 50. That is, the rotation operation of the optical fiber 50 along the direction indicated by the arrow S1 is performed. Note that the ferrule 110 is press-fitted into the opening portion of the front end surface 120a of the sleeve 120 in a state of being attached to the distal end portion of the optical fiber 50. During the alignment, the optical fiber 50 is maintained in a state of passing through the through hole of the structural body including the ferrule 110 and the sleeve 120 previously assembled. When the alignment work is completed, the ferrule 110 side of the structural body attached to the distal end portion of the optical fiber 50, that is, the structural body configured with the ferrule 110 and the sleeve 120 is press-fitted into the through hole 132 of the flange 130. The front view of the ferrule assembly 100 attached to the aligned optical fiber 50 coincides with the front views illustrated from the second stage to the lowermost stage in Fig. 1.

The optical connector 10 of the present disclosure mounts the optical fiber 50 that requires rotational positioning at the time of optical connection, such as the MCF 50A, the PMF 50B, and the bundle fiber 50C as illustrated in Fig. 1. Therefore, a structure for controlling the ferrule 110 and the flange 130 attached to the optical fiber 50 that requires rotational positioning so as not to rotate in the housing is important. Specifically, the flange rotates due to posture fluctuation caused by rotation of an elastic member such as a spring material in the wusing. Note that the spring material rotates in a circumferential direction centered in an expanding and contracting direction during expansion and contraction. Therefore, in the optical connector 10 of the present disclosure, in order to suppress the rotation of the flange, an urging force transmission member (hereinafter, referred to as a "buffer") rotatable together with the rotation of the elastic member independently from the flange is provided between the elastic member and the flange.

As structural conditions required for the buffer, at least the following three conditions are required.

### (First Condition)

The buffer may have a cylindrical shape with a hole in the center (any cross-sectional shape) so as not to interfere with the sleeve 120 of the ferrule assembly 100. In this case, since the buffer can be used without changing the existing sleeve 120, versatility is excellent.

### (Second Condition)

The face of the buffer contacting the flange 130 may be flat and bias the flange 130 across the entire face. As the shape of this face, for example, a circle with a hole at the center and a polygon with a point target with respect to the center of the hole can be adopted. In this case, since the urging force of the spring material is symmetrically applied to the rear surface 130b serving as the pressing surface of the flange 130, the generation of the rotational torque due to the application of the urging force can be effectively suppressed.

### (Third Condition)

Both the static friction coefficient between the spring material and the buffer and the static friction coefficient between the buffer and the flange 130 may be smaller than that between the spring material and the flange 130. For example, the material of the spring material and the flange 130 may be metal, and the material of the buffer may be a resin. In this case, since the friction between the members decreases, the rotational torque generated by the expansion and contraction of the spring material can be blocked with the buffer.

By the mechanism as described above, the optical connector 10 of the present disclosure can suppress the rotation of the ferrule 110 due to the expansion and contraction of the spring material and accurately realize the rotational positioning of the ferrule 110 in the housing. In addition, by selecting, for example, a material capable of an injection molding method as the material of the buffer, the buffer itself can be easily manufactured, and the optical connector 10 of the present disclosure enables both low connection loss characteristics and manufacturability.

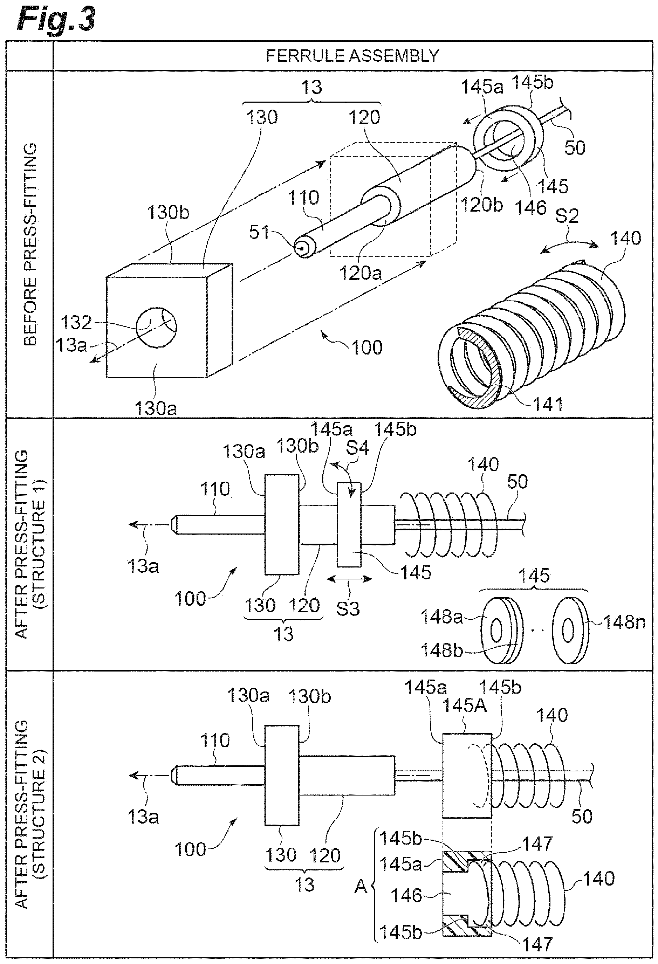

Fig. 3 is a diagram illustrating various structures of the ferrule assembly based on the conditions listed as described above. Specifically, in the upper stage (in Fig. 3, it is described as "before press-fitting"), the components of the ferrule assembly 100 before the sleeve 120 is press-fitted into the flange 130 are illustrated. The middle stage (in Fig. 3, it is described as "after press-fitting (Structure 1)"), is a diagram illustrating the ferrule assembly 100 to which an example of the buffer 145 is applied. The lower stage (in Fig. 3, it is described as "after press-fitting (Structure 2)"), is a diagram illustrating the ferrule assembly 100 to which another example of the buffer 145 is applied.

As illustrated in the upper stage of Fig. 3, the ferrule assembly 100 is configured with the ferrule 110 attached to the distal end portion of the optical fiber 50 from which the resin coating is removed to expose the glass fiber 51, the sleeve 120, the flange 130, and the buffer 145. Note that the sleeve 120 and the flange 130 configure the holding portion 13 to which the rear end portion of the ferrule 110 is fixed, and the central axis of the sleeve 120 and a central axis 13a of the holding portion 13 coincide with each other. The sleeve 120 has the front end surface 120a and the rear end surface 120b and also has a through hole into which the rear portion of the ferrule 110 is press-fitted in a state of allowing the optical fiber 50 to pass through. The flange 130 has the front surface 130a, the rear surface 130b, and the through hole 132 that connects the front surface 130a and the rear surface 130b and also through which a part of the sleeve 120 pass from the rear end surface 120b toward the front end surface 120a. The buffer 145 includes a first surface 140a, a second surface 145b, and a through hole 146 that connects the first surface 145a and the second surface 145b. The first surface 145a of the buffer 145 abuts against the rear surface 130b of the flange 130, and an abutting portion 141 of an elastic member (hereinafter, referred to as a "spring material") 140 is in contact with the second surface 145b. That is, the contact region between the flange 130 and the buffer 145 has an annular ring shape. Meanwhile, the contact region between the spring material 140 and the buffer 145 has a shape partially surrounding the central axis of the sleeve 120 but unevenly exists in a part of an annular ring centered on the central axis of the sleeve 120.

Note that the spring material 140 is a member stored in the housing of the optical connector 10, and expands and contracts in the corresponding housing in accordance with the position fluctuation of the ferrule assembly 100. At this time, it rotates along the outer circumferential direction of the sleeve 120 indicated by an arrow S2. That is, the spring material 140 itself rotates in the direction indicated by the arrow S2, and posture fluctuation of the corresponding spring material 140 is generated. Therefore, in the optical connector 10 of the present disclosure, the buffer 145 is provided between the flange 130 and the spring material 140 in order to avoid a state in which rotational torque is generated in the flange due to the rotation of the spring material 140. As illustrated in the middle stage of Fig. 3, the buffer 145 is a member that transmits the urging force of the spring material 140 to the flange 130 and is arranged between the flange 130 and the spring material 140. In particular, the through hole 146 of the buffer 145 has a size that allows a part of the sleeve 120 to pass therethrough and allows the buffer 145 itself to rotate along the circumferential direction about the central axis of the sleeve 120 as indicated by an arrow S4. Before the urging force of the spring material 140 is imparted, the buffer 145 is movable along the direction indicated by an arrow S3 along the central axis of the sleeve 120.

A modification of the buffer 145 is also illustrated in the middle stage of Fig. 3. That is, the modification of the buffer 145 may be configured with a plurality of buffer elements 148a, 148b, ..., and 148n as an urging force transmission element. In this case, each of the plurality of buffer elements 148a, 148b, ..., and 148n has a hole configuring a part of the through hole 146, and is arranged along the central axis of the sleeve 120 in a state of allowing a part of the sleeve 120 to pass through and being rotatable about the central axis of the sleeve 120.

Further, the maximum width of a planar figure defined by the outer contour of the first surface 145a of the buffer 145 is smaller than the minimum width of the planar figure defined by the outer contour of the rear surface 130b of the flange 130 against which the first surface 145a abuts. Meanwhile, the minimum width of the second surface 145b of the buffer 145 is larger than the maximum width of the planar figure surrounded by the spring material 140 when the spring material 140 is viewed along the central axis of the sleeve 120. With this configuration, a contact state between the flange 130 and the spring material 140 can be avoided. The contact region between the first surface 145a of the buffer 145 and the rear surface 130b of the flange 130 may have an annular shape centered on the central axis of the sleeve 120 as described above. The static friction coefficient between the flange 130 and the buffer 145 may be less than the static friction coefficient between the flange 130 and the spring material 140. As an example, the flange 130 is comprised of a metal material, and the buffer 145 is comprised of a resin material.

In the example illustrated in the lower stage of Fig. 3, a buffer 145A is attached to the distal end portion of the spring material 140 including the corresponding abutting portion 141. Note that a region A illustrated in the lower stage of Fig. 3 illustrates a cross-sectional structure of the buffer 145. The buffer 145 has the through hole 146 through which a part of the sleeve 120 passes and is provided with a storage portion 147 that stores a distal end portion of the spring material 140. The bottom surface of the storage portion 147 of the buffer 145A corresponds to the second surface 145b of the corresponding buffer 145A.

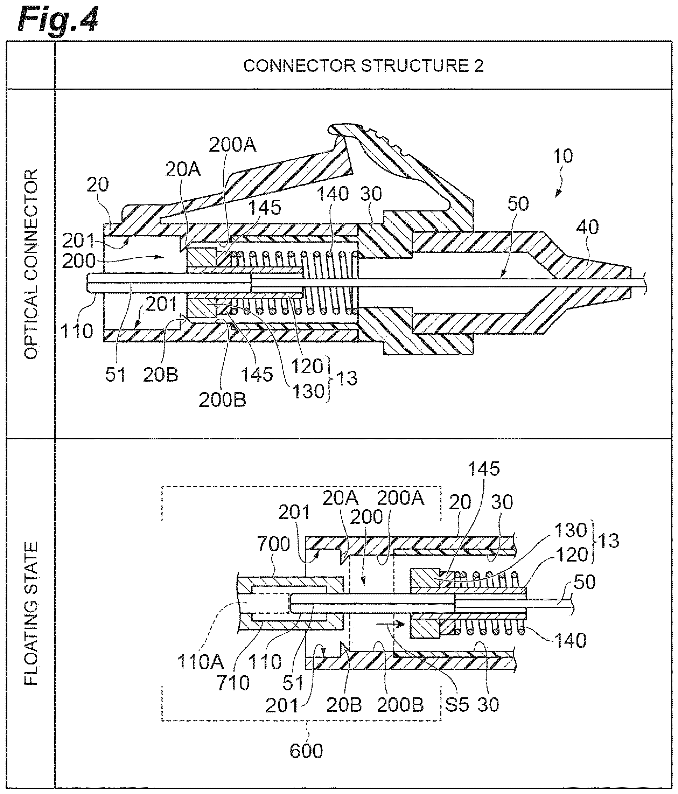

Fig. 4 is a diagram illustrating a cross-sectional structure of each part of the optical connector of the present disclosure (in Fig. 4, it is referred to as "Connector Structure 2") and a floating structure of the ferrule assembly stored in a housing. Specifically, the upper stage (in Fig. 4, it is referred to as an "optical connector") is a cross-sectional view of the optical connector 10 taken along line I-I illustrated in the uppermost stage of Fig. 1. The lower stage (in Fig. 4, it is described as a "floating state") illustrates the optical connector 10 and the optical connector on the opposite side immediately after the front end portion is inserted into the opening portion of an adapter so as to sandwich the adapter (a state in which the ferrule 110 of the corresponding optical connector 10 and a ferrule 110A of the optical connector on the counterpart side abut against each other).

As illustrated in the lower stage of Fig. 4, the optical connector 10 has a structure to be mounted to an adapter 600 by inserting the ferrule 110 into an alignment sleeve 710 in the adapter 600.

As shown in the upper stage of Fig. 4, the optical connector 10 has a housing for stably storing the ferrule assembly 100 attached to the distal end portion of the optical fiber 50. The housing of the optical connector 10 is configured with the front housing 20 and the rear housing 30 fitted into the front housing 20, and a boot 40 is fixed to the rear housing 30 in a state where the optical fiber 50 penetrates. The distal end of the ferrule 110 configuring a part of the ferrule assembly 100 protrudes from the front opening of the front housing 20. In addition, an inner wall surface 201 of the front housing 20 is provided with positioning portions 20A and 20B provided with inclined surfaces against which the edge of the flange 130 of the ferrule assembly 100 to be stored abuts. Furthermore, the inner wall surface 201 of the front housing 20 is provided with flat surfaces 200A and 200B facing an outer peripheral surface of the flange 130 of the ferrule assembly 100. Note that the internal space of the housing substantially corresponds to an internal space 200 of the front housing 20, and the internal space 200 means a space surrounded by the inner wall surface 201.

Meanwhile, the spring material 140 is stored inside the rear housing 30, and when the rear housing 30 is inserted into the front housing 20 from the backward of the front housing 20, the spring material 140 is compressed by being sandwiched between the ferrule assembly 100 stored in the front housing 20 and the front portion of the rear housing 30 via the buffer 145. Note that a through hole for pulling out the optical fiber 50 is provided in the rear portion of the rear housing 30. At this time, the ferrule assembly 100 receives an elastic force from the spring material 140 via the buffer 145, that is, a restoring force of the spring material 140, and an edge of an end surface positioned on the front surface 130a of the flange 130 is pressed against the positioning portion 20A and the positioning portion 20B of the front housing 20. As a result, the positioning portions 20A and 20B restrict the movement of the holding portion 13 in the direction along the central axis 13a and the movement of the holding portion 13 in the direction intersecting the direction along the central axis 13a.

Next, as illustrated in the lower stage of Fig. 4, the adapter 600 to which the optical connector 10 is mounted has a first opening into which the front end portion of the optical connector on the counterpart side is inserted and a second opening into which the front end portion of the optical connector 10 is inserted. Further, the adapter 600 stores the alignment sleeve 710 that is a split sleeve and a sleeve holder 700 that holds the alignment sleeve. After the front end portion of the optical connector 10 is completely inserted into the second opening of the adapter 600, that is, after the ferrule 110 is inserted into the alignment sleeve 710, when the ferrule 110A of the optical connector on the counterpart side is inserted into the alignment sleeve 710 through the first opening, the ferrule assembly 100 in the corresponding optical connector 10 is retracted in the housing of the optical connector 10 along the direction indicated by an arrow S5 in the lower stage of Fig. 4. The optical connector 10 has a floating structure, and the ferrule assembly 100 is installed at a position separated from the inner wall surface 201 in the corresponding optical connector 10 in a state of being biased via the buffer 145.

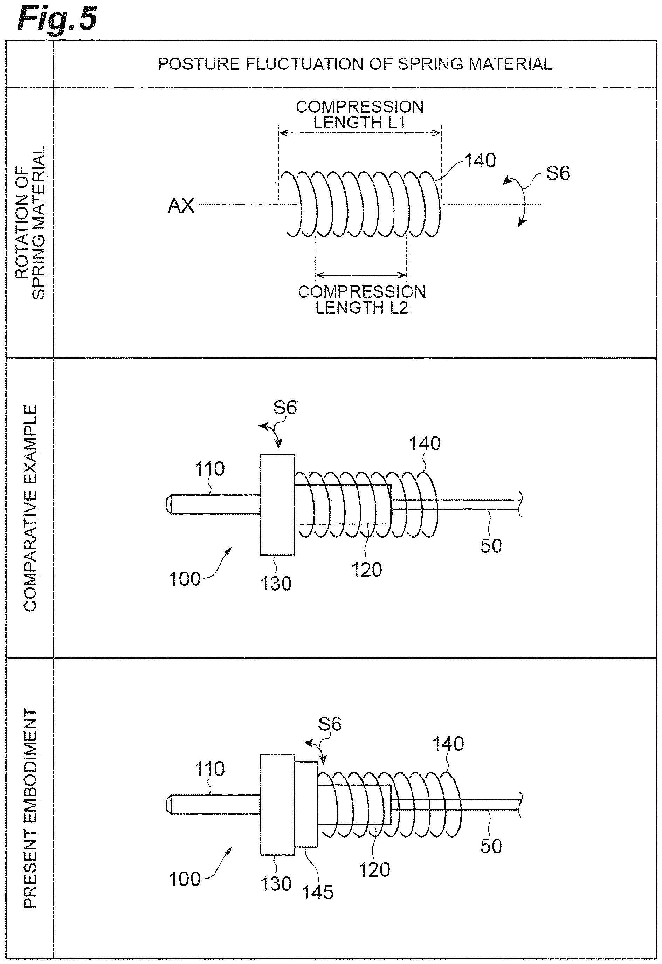

Fig. 5 is a diagram illustrating an effect (in Fig. 5, it is described as "posture fluctuation of spring material") of the optical connector of the present disclosure. Specifically, the upper stage (in Fig. 5, it is described as "rotation of spring material") is a diagram illustrating the rotation of the spring material 140 as an example of the posture fluctuation of the spring material 140. The middle stage (in Fig. 5, it is described as "Comparative Example") is a diagram illustrating a defect when the spring material 140 is directly in contact with the flange 130 of the ferrule assembly 100 as a comparative example. The lower stage (in Fig. 5, it is described as "Present Embodiment") is a diagram illustrating the effect of the structure applied to the optical connector 10 of the present disclosure (the configuration in which the urging force of the spring material 140 is transmitted to the flange 130 via the buffer 145).

As illustrated in the upper stage of Fig. 5, the spring material 140 in a state of being stored in the housing as illustrated in the upper stage of Fig. 4 has a compression length L1. Meanwhile, as illustrated in the lower stage of Fig. 4, when the ferrule assembly 100 is in the floating state, the spring material 140 has a compression length L2 shorter than the compression length L1. At this time, both ends of the spring material 140 stored in the housing are not in contact with the rear housing 30 and the ferrule assembly 100, specifically, the flange 130 or the buffer 145 so that a contact region thereof has an annular ring shape. That is, the contact region is not symmetrical with respect to the central axis of the sleeve 120. Therefore, when the contraction of the spring material 140 is repeated, a rotational torque is generated in the spring material 140 with respect to the rear housing 30, and the spring material 140 rotates along the direction indicated by an arrow S6. The rotation of the spring material 140 generates rotational torque on a member positioned on the opposite side of the rear housing 30.

Particularly, in the comparative example illustrated in the middle stage of Fig. 5, since the distal end portion of the spring material 140 is in direct contact with the flange 130, the flange 130 also rotates along the direction indicated by an arrow S6 due to the rotation of the spring material 140 along the direction indicated by the arrow S6. Therefore, the accuracy of the rotational positioning of the ferrule 110 in the housing is decreased.

Meanwhile, in the present embodiment illustrated in the lower stage of Fig. 5, the buffer 145 is arranged between the flange 130 and the spring material 140. The buffer 145 is rotatable about a central axis of the buffer 145 (sleeve 120. In this case, since the distal end portion of the spring material 140 is separated from the flange 130 via the buffer 145, even if the spring material 140 rotates along the direction indicated by an arrow S6, the rotation only causes the rotational torque in the buffer 145. At least, because the buffer 145 is viewed separately from the flange 130, the likelihood of rotational torque being produced on the flange 130 is significantly reduced. Therefore, the rotational positioning of the ferrule 110 in the housing can be accurately realized.

Note that, in order to realize and maintain the highly accurate rotational positioning state, the static friction coefficient between the flange 130 and the buffer 145 may be set to be smaller than the static friction coefficient between the flange 130 and the spring material 140. Specifically, the buffer 145 comprised of a resin material may be applied to the flange 130 comprised of a metal material.

### Reference Signs List

10 ... Optical connector
13 ... Holding portion
13a ... Central axis
20 ... Front housing
20A, 20B ... Positioning portion
30 ... Rear housing
40 ... Boot
50 ... Optical fiber
50A ... MCF
50B ... PMF
50C ... Bundle fiber
51, 51A, 51B, 51C, 510 ... Glass fiber
52A, 52B, 520 ... Core
53A, 53B ... Common cladding
54 ... Stress applying portion
100 ... Ferrule assembly
110 ... Ferrule
120 ... Sleeve
120a ... Front end surface
120b ... Rear end surface
130 ... Flange
130a ... Front surface
130b ... Rear surface
132 ... Through hole
140 ... Spring material
141 ... Abutting portion
145 ... Buffer
145a ... First surface
145b ... Second surface
146 ... Through hole
147 ... Storage portion
148a to 148n ... Buffer element
200A, 200B ... Flat surface
200 ... Internal space
201 ... Inner wall surface
500 ... Single core optical fiber
530 ... Cladding
600 ... Adapter
700 ... Sleeve holder
710 ... Alignment sleeve
AX ... Optical axis
S1 to S6 ... Arrow
L_{A} ... Reference azimuth
L_{R} ... Installation reference line

## Claims

1. An optical connector attached to an optical fiber including a glass fiber and a resin coating covering the glass fiber, the optical connector comprising:
a ferrule assembly including a ferrule fixed to a distal end portion of the glass fiber exposed from the resin coating in the optical fiber and a holding portion to which a rear end portion of the ferrule is fixed and provided with a flange;
a housing having an internal space in which at least the holding portion of the ferrule assembly is stored, and a positioning portion for restricting movement of the holding portion in the internal space;
an elastic member configured to bias the flange toward the positioning portion; and
an urging force transmission member having a first surface abutting against the flange and a second surface positioned on an opposite side of the first surface and abutting against the elastic member, the urging force transmission member transmitting an urging force by the elastic member to the flange, wherein
the urging force transmission member has a through hole that allows the holding portion to pass therethrough and is arranged between the flange and the elastic member in a state of allowing a part of the holding portion to pass through and being rotatable about a central axis of the holding portion.

2. The optical connector according to claim 1, wherein
the urging force transmission member is configured with a plurality of urging force transmission elements, and
each of the plurality of urging force transmission elements has a hole configuring a part of the through hole, and is arranged along the central axis of the holding portion in a state of allowing a part of the holding portion to pass through and being rotatable about the central axis of the holding portion.

3. The optical connector according to claim 1 or 2, wherein
a maximum width of a planar figure defined by an outer contour of the first surface of the urging force transmission member is smaller than a minimum width of a planar figure defined by an outer contour of a surface of the flange against which the first surface abuts, and a minimum width of a planar figure defined by an outer contour of the second surface of the urging force transmission member is larger than a maximum width of a planar figure surrounded by the elastic member when the elastic member is viewed along the central axis of the holding portion.

4. The optical connector according to any one of claims 1 to 3, wherein
a contact region between the first surface of the urging force transmission member and the flange has an annular shape centered on the central axis of the holding portion.

5. The optical connector according to any one of claims 1 to 4, wherein
a static friction coefficient between the flange and the urging force transmission member is smaller than a static friction coefficient between the flange and the elastic member.

6. The optical connector according to any one of claims 1 to 5, wherein
the flange is comprised of a metal material, and the urging force transmission member is comprised of a resin material.

7. The optical connector according to any one of claims 1 to 6, wherein
the optical fiber is any one of a multicore fiber, a polarization maintaining fiber, and a bundle fiber.

8. The optical connector according to any one of claims 1 to 7, wherein
the holding portion includes a sleeve into which the rear end portion of the ferrule is inserted, and
a central axis of the sleeve coincides with the central axis of the holding portion.

9. The optical connector according to any one of claims 1 to 8, wherein
the positioning portion restricts movement of the holding portion in a direction along the central axis and movement of the holding portion in a direction intersecting the direction along the central axis.

10. The optical connector according to any one of claims 1 to 9, wherein
the elastic member is a spring material that rotates in a circumferential direction centered in an expanding and contracting direction during expansion and contraction.
